# FASCICULE DE BREVET EUROPEEN

(11) **EP 1 875 095 B1**
(45) Date de publication et mention de la délivrance du brevet: **06.08.2008**
(21) Numéro de dépôt: 06726307.9
(22) Date de dépôt: 05.04.2006
(51) Int. Cl.: F16D 23/06, F16D 23/04, F16H 63/32

(54) **SYNCHRONISEUR DE BOITE DE VITESSES MANUELLE AVEC ASSISTANCE AU CRABOTAGE INTEGREE**
SYNCHRONISIEREINRICHTUNG FÜR SCHALTGETRIEBE MIT INTEGRIERTER KLAUENKUPPLUNGSUNTERSTÜTZUNG
MANUAL GEARBOX SYNCHRONIZER WITH INTEGRATED JAW CLUTCHING ASSISTANCE

(30) Priorité: 21.04.2005 FR 0551020
(43) Date de publication de la demande: 09.01.2008
(73) Titulaire: RENAULT S.A.S., 92100 Boulogne Billancourt (FR)
(72) Inventeur: GARNIER, Nicolas, F-77680 Roissy en Brie (FR)
(74) Mandataire: Rougemont, Bernard
(86) Numéro de dépôt international: PCT/FR2006/050301
(87) Numéro de publication internationale: WO 2006/111672

(56) Documents cités:
- EP-A- 0 695 892
- DE-A1- 10 228 499
- US-A- 4 238 012
- US-E1- R E37 697
- PATENT ABSTRACTS OF JAPAN vol. 2000, no. 09, 13 octobre 2000 (2000-10-13) & JP 2000 170909 A (TOCHIGI FUJI IND CO LTD), 23 juin 2000 (2000-06-23)
- PATENT ABSTRACTS OF JAPAN vol. 013, no. 287 (M-844), 30 juin 1989 (1989-06-30) & JP 01 079445 A (BRIDGESTONE CORP), 24 mars 1989 (1989-03-24)

## Description

La présente invention se rapporte à un synchroniseur de boîte de vitesses manuelle comprenant un moyeu fixé sur un arbre de boîte et un baladeur coulissant axialement sur le moyeu pour repousser un anneau de synchronisation contre un pignon fou de manière à égaliser la vitesse angulaire de l'anneau avec celle du pignon, avant de traverser l'anneau pour continuer sa course en direction du pignon fou et venir craboter ce dernier.

Après, la synchronisation, lorsque les dents du baladeur ont traversé celles de l'anneau de synchronisation, et continuent en « vol libre » leur course en direction du pignon fou, la vitesse de déplacement du baladeur est normalement liée à l'effort appliqué par le conducteur sur son levier lors du passage de vitesses. Cet effort peut s'avérer insuffisant, en cas de passage « lent » ou « tranquille », pour assurer le crabotage du baladeur sur le pignon fou. En effet, si le baladeur met trop de temps pour parcourir la distance de vol libre après avoir synchronisé sa vitesse angulaire avec celle du pignon fou, il se désynchronise à nouveau, et son entrée en contact avec le pignon fou se traduit par un choc de dentures appelé « croquement », ressenti désagréablement par le conducteur.

Pour accélérer le baladeur dans sa phase de vol libre, il a déjà été proposé d'utiliser une assistance au niveau de la commande interne de la boîte, par exemple sur le levier de passage en entrée de la boîte de vitesses, ou sur l'axe de fourchette, entre le crabot et la fourchette, de manière à prendre le relais de l'effort impulsé par le conducteur. Un tel système est connu du DE 162 28499 A1

Toutefois, ces systèmes d'assistance au passage sont éloignés du baladeur, de sorte que les jeux de la commande absorbent une partie de l'énergie restituée par le ressort.

La présente invention vise à utiliser pleinement l'énergie d'un ressort d'assistance pour accélérer le baladeur pendant la phase de vol libre.

Dans ce but, elle propose que le baladeur comporte au moins un ressort d'assistance au passage des vitesses libérant son énergie pendant la phase de vol libre.

De préférence, le ressort est disposé entre un manchon intérieur du baladeur coulissant sur le moyeu et un manchon extérieur coulissant sur le manchon intérieur.

D'autres caractéristiques et avantages de l'invention apparaîtront clairement à la lecture de la description suivante de celui-ci, en liaison avec les dessins annexés, sur lesquels :
- la figure 1 montre un premier mode de réalisation de l'invention,
- la figure 2 montre une variante de la figure 1, et
- les figures 3 et 3A ; 4 et 4A ; 5 et 5A, illustrent le fonctionnement du synchroniseur de la figure 1, en le représentant respectivement au point mort, en phase de synchronisation, et en phase de vol libre.

Le synchroniseur auquel s'applique l'invention, comprend de façon classique un moyeu 1 fixé sur un arbre de boîte 2, et un baladeur 3 coulissant axialement sur le moyeu 1. Il peut ainsi repousser un anneau de synchronisation 4 contre un pignon fou 6 de manière à égaliser la vitesse angulaire de l'anneau 4 avec celle du pignon 6, avant de traverser l'anneau 4, pour continuer sa course en direction du pignon fou et venir craboter ce dernier.

Sur toutes les figures, le baladeur 3 proposé comprend deux manchons cylindriques 7, 8, à savoir un manchon intérieur 7 du baladeur coulissant sur le moyeu 1, et un manchon extérieur 8 coulissant sur le manchon intérieur 7. Toutefois, le manchon extérieur 8 est arrêté axialement des deux côtés sur le manchon intérieur 7.

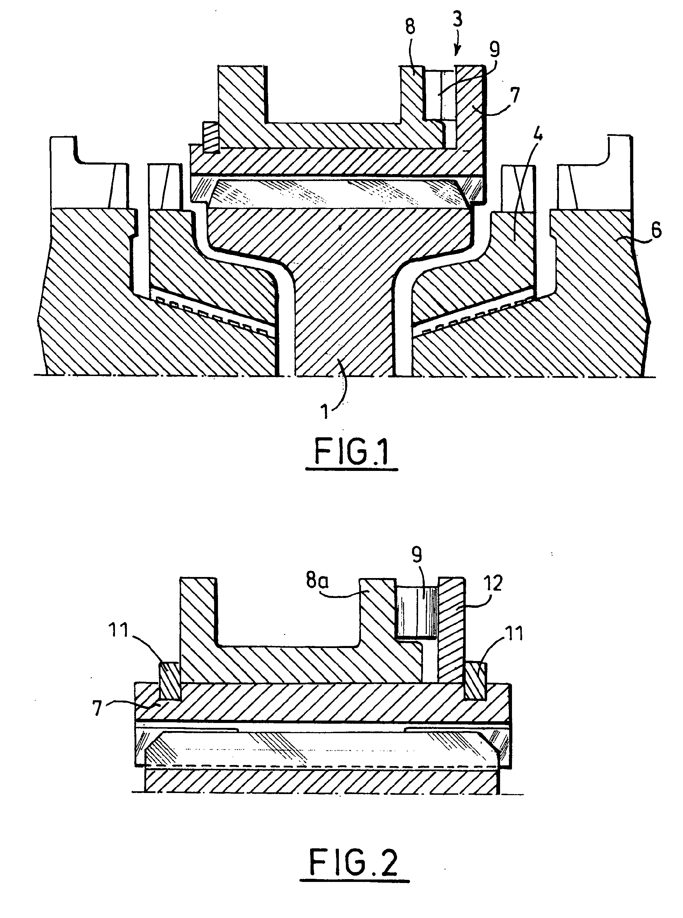

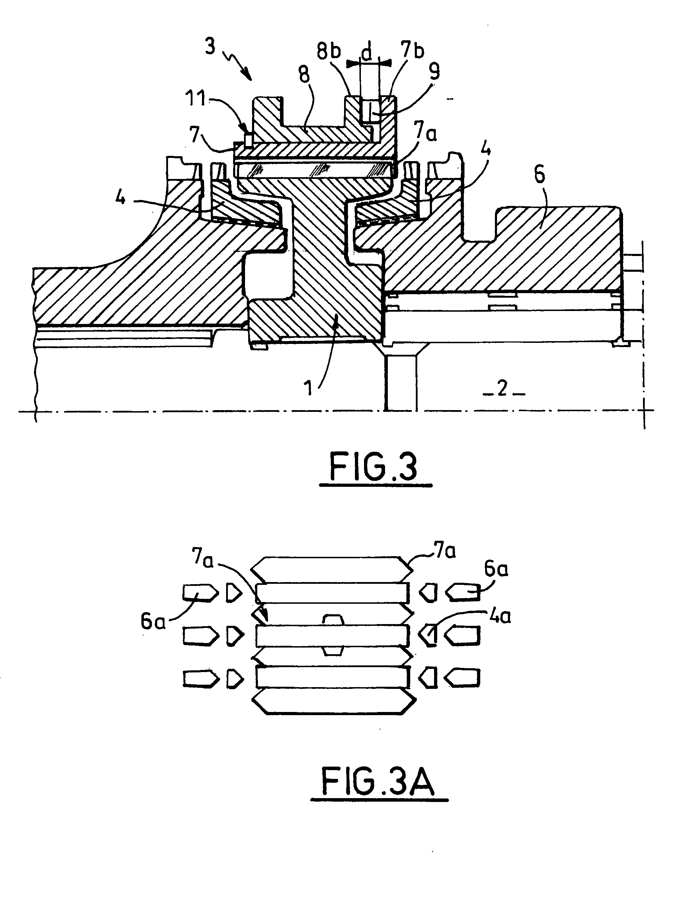

Sur la figure 1, ainsi que sur les figures 3 à 5A, le baladeur 3 comprend un seul ressort 9 d'assistance au passage des vitesses. Le ressort 9 est par exemple une rondelle ondulée. Le manchon intérieur 7 porte la denture 7a du baladeur 3, assurant les fonctions d'armement de synchronisation et de crabotage du baladeur sur le pignon. Le manchon extérieur 8 reçoit la fourchette de passage des vitesses (non représentée). Conformément à l'invention, le ressort 9 libère son énergie pendant la phase de vol libre pour accélérer le déplacement du manchon intérieur 7, et donc de la denture du baladeur 7a, en direction de la denture 6a, ou crabots, du pignon.

Selon le mode de réalisation non limitatif de l'invention, illustré par les figures 3 à 5A, la course du manchon extérieur 8 sur le manchon intérieur 7, est limitée du côté droit par un épaulement 7b du manchon intérieur 7. Du côté gauche, le manchon extérieur est arrêté par un anneau d'arrêt 11, fixé sur le manchon intérieur 7. Le ressort d'assistance 9 prend appui sur un bord 8b du manchon extérieur 8, et sur l'épaulement 7b du manchon intérieur 7.

Au point mort (figures 3 et 3A), le baladeur 3 est centré sur le moyeu 1, et ses dents 7a sont à égale distance des deux anneaux de synchronisation 4 et des crabots 6a des deux pignons fous 6. Le ressort 9 est précontraint par un effort F1 permettant de plaquer le manchon extérieur 8 vers la gauche, contre l'anneau d'arrêt 11. Le manchon extérieur 8 est à une distance d de l'épaulement 7b

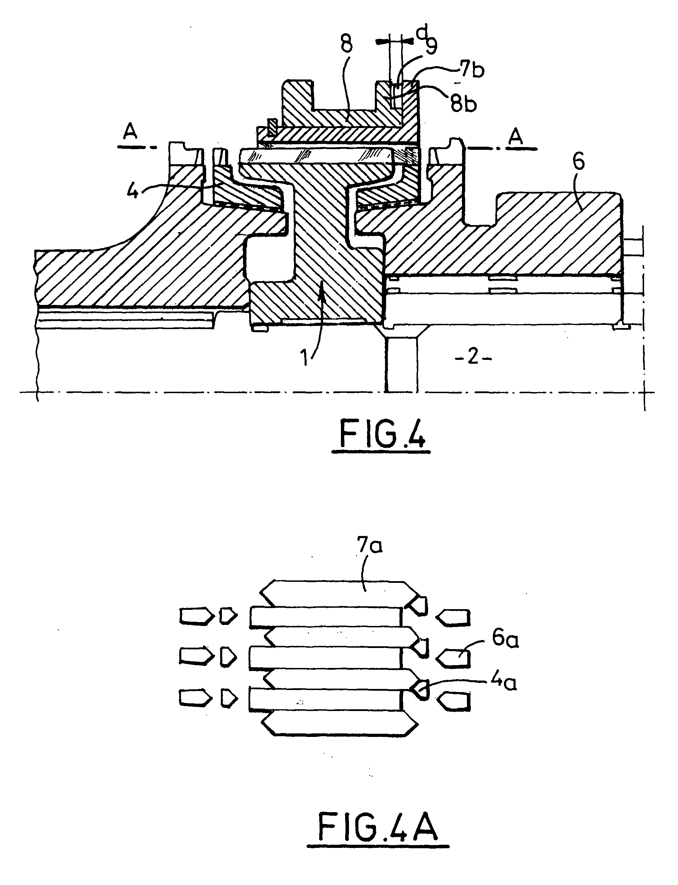

En phase de synchronisation (figures 4 et 4A), le déplacement du baladeur 3 vers la droite est assuré par une fourchette (non représentée) jusqu'au contact des entrées des dentures 3a du baladeur avec les entrées des dentures 4a de l'anneau de synchronisation 4. L'effort nécessaire F2 pour la synchronisation est supérieur à F1. Il est appliqué sur le manchon extérieur 8, et comprime axialement le ressort 9, en réduisant le jeu axial entre l'épaulement 7b et le rebord 8b, jusqu'à la butée des deux manchons (e = 0). Le ressort 9 emmagasine de l'énergie sans pouvoir la libérer.

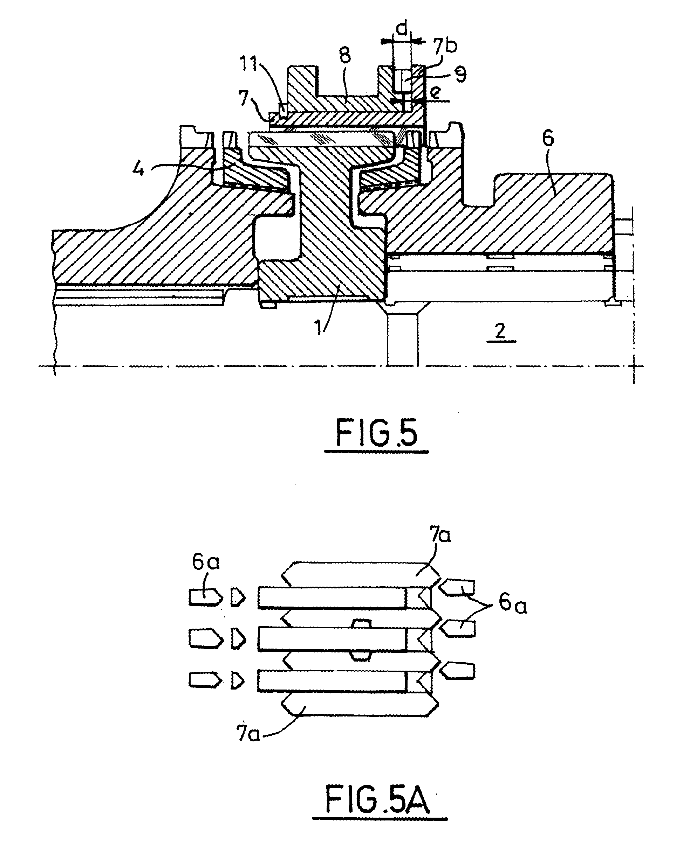

En phase de vol libre (figures 5 et 5A), les dents 7a du baladeur ont traversé l'anneau 4, et poursuivent leur course en direction des crabots 6a du pignon. Lors de la libération de l'effort du ressort 9, qui suit la synchronisation, le manchon intérieur 7 bénéficie d'un effet « lance pierre », qui lui permet d'atteindre les crabots 6a du pignon fixe avec suffisamment d'élan pour supprimer tout risque de « croquement » mentionné plus haut.

La fonction ressort de la rondelle ondulée 9, peut aussi être remplie par un ressort hélicoïdal de compression, ou par une rondelle composée d'un matériau élastomère répondant aux qualités requises.

Dans le mode de réalisation non limitatif décrit ci-dessus, le baladeur 3 comprend un anneau d'arrêt 11, et un seul ressort. Toutefois sans sortir du cadre de l'invention on peut envisager d'autres d'empilages avec par exemple deux anneaux d'arrêt 11, comme sur la figure 2, où un deuxième anneau d'arrêt retient une rondelle d'appui 12 du ressort 9.

On peut aussi prévoir des dispositions symétriques, pour assister le crabotage des deux pignons associés au synchroniseur, avec par exemple deux ressorts d'assistance symétriques placés de part et d'autre du manchon extérieur, et arrêtés par des rondelles ou des épaulements. Les deux ressorts seront alors en appui entre les bords du manchon extérieur ou des rondelles fixes immobilisées par des anneaux d'arrêt.

## Revendications

1. Synchroniseur de boîte de vitesses manuelle comprenant un moyeu (1) fixé sur un arbre de boîte (2), un baladeur (3) coulissant axialement sur le moyeu (1) pour repousser un anneau de synchronisation (4) contre un pignon fou (6) de manière à égaliser la vitesse angulaire de l'anneau avec celle du pignon, avant de traverser l'anneau et de continuer sa course en vol libre vers le pignon fou pour venir craboter ce dernier, **caractérisé en ce que** le baladeur (3) comporte au moins un ressort d'assistance (9) au passage de vitesses, qui est disposé entre un manchon intérieur (7) du baladeur coulissant sur le moyeu et un manchon extérieur (8) coulissant sur le manchon intérieur (7) et libère de son énergie pendant la phase de vol libre.

2. Synchroniseur selon la revendication 1, **caractérisé en ce que** le manchon intérieur (7) porte la denture (7a) du baladeur, qui assure les fonctions d'armement, de synchronisation, et de crabotage du baladeur sur le pignon.

3. Synchroniseur selon la revendication 2, **caractérisé en ce que** le manchon extérieur (8) reçoit la fourchette de passage de vitesses.

4. Synchroniseur selon la revendication 1, 2 ou 3, **caractérisé en ce que** le manchon extérieur (8) est arrêté axialement des deux côtés sur le manchon intérieur (7).

5. Synchroniseur selon la revendication 4, **caractérisé en ce que** le ressort d'assistance (9) prend appui sur un bord du manchon extérieur (8) et sur l'épaulement (7b) du manchon intérieur (7).

6. Synchroniseur selon la revendication 5, **caractérisé en ce que** le manchon extérieur (8) est arrêté d'un côté par l'épaulement (7b) du manchon intérieur et de l'autre côté par un anneau d'arrêt (11), fixé sur le manchon intérieur (7).

7. Synchroniseur selon l'une des revendications précédentes, **caractérisé en ce que** le baladeur (3) comporte un deuxième anneau d'arrêt (11) retenant une rondelle d'appui (12) du ressort.

8. Synchroniseur selon l'une des revendications précédentes **caractérisé en ce que** le baladeur (3) comporte deux ressorts d'assistance (9) en appui entre les bords du manchon extérieur (8) et des épaulements du manchon intérieur (7).

9. Synchroniseur selon la revendication 5, **caractérisé en ce que** le baladeur (3) comporte deux ressorts d'assistance (9) en appui entre les bords du manchon extérieur (8) et des rondelles (12) fixées sur le manchon intérieur (7).

10. Synchroniseur selon l'une des revendications précédentes, **caractérisé en ce que** le ressort (9) est une rondelle ondulée.

## Claims

1. Manual gearbox synchronizer comprising a hub (1) attached to a gearbox shaft (2), a sliding gear (3) sliding axially on the hub (1) to push a blocking ring (4) against an idler gear (6) so as to equalize the angular speed of the ring with that of the gear, before traversing the ring and continuing its coasting travel toward the idler gear in order to jaw clutch the latter, **characterized in that** the sliding gear (3) comprises at least one gearchange assister spring (9) that is placed between an inner sleeve (7) of the sliding gear sliding on the hub and an outer sleeve (8) sliding on the inner sleeve (7) and releases its energy during the coasting phase.

2. Synchronizer according to Claim 1, **characterized in that** the inner sleeve (7) supports the teeth (7a) of the sliding gear, which performs the functions of activation, synchronization and jaw clutching of the sliding gear on the gear.

3. Synchronizer according to Claim 2, **characterized in that** the outer sleeve (8) receives the gear shift fork.

4. Synchronizer according to Claim 1, 2 or 3, **characterized in that** the outer sleeve (8) is stopped axially on both sides on the inner sleeve (7).

5. Synchronizer according to Claim 4, **characterized in that** the assister spring (9) presses on one edge of the outer sleeve (8) and on the shoulder (7b) of the inner sleeve (7).

6. Synchronizer according to Claim 5, **characterized in that** the outer sleeve (8) is stopped on one side by the shoulder (7b) of the inner sleeve and on the other side by a stop ring (11) attached to the inner sleeve (7).

7. Synchronizer according to one of the preceding claims, **characterized in that** the idler gear (3) comprises a second stop ring (11) retaining a pressure washer (12) of the spring.

8. Synchronizer according to one of the preceding claims, **characterized in that** the idler gear (3) comprises two assister springs (9) pressing between the edges of the outer sleeve (8) and the shoulders of the inner sleeve (7).

9. Synchronizer according to Claim 5, **characterized in that** the idler gear (3) comprises two assister springs (9) pressing between the edges of the outer sleeve (8) and the washers (12) attached to the inner sleeve (7).

10. Synchronizer according to one of the preceding claims, **characterized in that** the spring (9) is a wavy washer.

## Patentansprüche

1. Synchronisierungskupplungsnabe für manuelles Schaltgetriebe, die eine an einer Getriebewelle (2) befestigte Nabe (1) und ein Schieberad (3) enthält, das auf der Nabe (1) axial gleiten kann, um einen Synchronisierring (4) gegen ein Freilaufritzel (6) zu schieben, derart, dass die Winkelgeschwindigkeit des Rings an jene des Ritzels angeglichen wird, bevor es sich durch den Ring bewegt und seine Bahn kräftefrei zum Freilaufritzel fortsetzt, um mit diesem Letzteren in einen Klaueneingriff zu gelangen, **dadurch gekennzeichnet, dass** das Schieberad (3) wenigstens eine Feder (9) für die Unterstützung beim Drehzahlübergang aufweist, die zwischen einer Innenmuffe (7) des Schieberads, die auf der Nabe gleitet, und einer Außenmuffe (8), die auf der Innenmuffe (7) gleitet, angeordnet ist und seine Energie während der kräftefreien Phase abgibt.

2. Synchronisierungskupplungsnabe nach Anspruch 1, **dadurch gekennzeichnet, dass** die Innenmuffe (7) die Zahnung (7a) des Schieberads trägt, die die Funktionen des Spannens, der Synchronisation und des Klaueneingriffs des Schieberads am Ritzel gewährleistet.

3. Synchronisierungskupplungsnabe nach Anspruch 2, **dadurch gekennzeichnet, dass** die Außenmuffe (8) die Drehzahlwechselgabel aufnimmt.

4. Synchronisierungskupplungsnabe nach Anspruch 1, 2 oder 3, **dadurch gekennzeichnet, dass** die Außenmuffe (8) an zwei Seiten an der Innenmuffe (7) axial arretiert ist.

5. Synchronisierungskupplungsnabe nach Anspruch 4, **dadurch gekennzeichnet, dass** sich die Unterstützungsfeder (9) an einem Rand der Außenmuffe (8) und an der Schulter (7b) der Innenmuffe (7) abstützt.

6. Synchronisierungskupplungsnabe nach Anspruch 5, **dadurch gekennzeichnet, dass** die Außenmuffe (8) auf einer Seite durch die Schulter (7b) der Innennabe und auf der anderen Seite durch einen Arretierungsring (11), der an der Innennabe (7) befestigt ist, arretiert ist.

7. Synchronisierungskupplungsnabe nach einem der vorhergehenden Ansprüche, **dadurch gekennzeichnet, dass** das Schieberad (3) einen zweiten Arretierungsring (11) enthält, der eine Abstützscheibe (12) der Feder festhält.

8. Synchronisierungskupplungsnabe nach einem der vorhergehenden Ansprüche, **dadurch gekennzeichnet, dass** das Schieberad (3) zwei Unterstützungsfedern (9) aufweist, die sich zwischen den Rändern der Außenmuffe (8) und den Schultern der Innenmuffe (7) abstützen.

9. Synchronisierungskupplungsnabe nach Anspruch 5, **dadurch gekennzeichnet, dass** das Schieberad (3) zwei Unterstützungsfedern (9) aufweist, die sich zwischen den Rändern der Außenmuffe (8) und den an der Innenmuffe (7) befestigten Scheiben (12) abstützen.

10. Synchronisierungskupplungsnabe nach einem der vorhergehenden Ansprüche, **dadurch gekennzeichnet, dass** die Feder (9) eine Wellenscheibe ist.
